# EUROPÄISCHE PATENTSCHRIFT

(11) **EP 3 560 081 B1**
(45) Veröffentlichungstag und Bekanntmachung des Hinweises auf die Patenterteilung: **05.05.2021**
(21) Anmeldenummer: 17829649.7
(22) Anmeldetag: 21.12.2017
(51) Int. Cl.: H02K 9/02, H02K 9/04

(54) **STATORTRÄGER FÜR EINEN STATOR EINES WINDENERGIEANLAGENGENERATORS, SOWIE STATOR, GENERATOR UND WINDENERGIEANLAGE MIT DIESEM STATORTRÄGER**
STATOR CARRIER FOR A STATOR OF A GENERATOR FOR A WIND TURBINE, AND A STATOR, GENERATOR AND WIND TURBINE WITH THIS STATOR CARRIER
SUPPORT DE STATOR POUR UN STATOR D'UN GÉNÉRATEUR POUR UNE ÉOLIENNE, AINSI QUE STATOR, GÉNÉRATEUR ET ÉOLIENNE COMPORTANT CE SUPPORT DE STATOR

(30) Priorität: 21.12.2016 DE 102016125218
(43) Veröffentlichungstag der Anmeldung: 30.10.2019
(73) Patentinhaber: Wobben Properties GmbH, 26607 Aurich (DE)
(72) Erfinder: MESSNER, Birte, 26427 Bensersiel (DE); RÖER, Jochen, 27777 Ganderkesee (DE); ZIEMS, Jan Carsten, 26607 Aurich (DE)
(74) Vertreter: Eisenführ Speiser
(86) Internationale Anmeldenummer: PCT/EP2017/084228
(87) Internationale Veröffentlichungsnummer: WO 2018/115357

(56) Entgegenhaltungen:
- EP-A1- 2 806 542
- DE-A1- 10 225 221

## Beschreibung

Die vorliegende Erfindung betrifft einen Statorträger für einen Stator eines Windenergieanlagengenerators, insbesondere eines vielpoligen langsamdrehenden Synchron-Ringgenerators.

Vorbezeichnete Statorträger und Statoren sind allgemein bekannt.

Im Betrieb des Windenergieanlagengenerators kommt es infolge der durch das Erregerfeld induzierten Spannung zu Wärmeentwicklung im Generator, insbesondere im Bereich der Statorwicklung. Es ist daher notwendig, zum Gewährleisten der Leistungsausbeute und Ausfallsicherheit des Windenergieanlagengenerators Wärme aus dem Stator abzuführen. Im Stand der Technik hat es diesbezüglich bereits verschiedene Ansätze gegeben. Bisher vorgeschlagene Kühlmethoden stehen vor der Herausforderung, dass der Stator einer Windenergieanlage eine vergleichsweise hohe Tiefe hat, nämlich typischerweise 0,5 Meter oder mehr, bisweilen auch 1,0 Meter oder mehr.

Im Stand der Technik sind Kühlkonzepte bekannt, bei denen die Luft in einer erzwungenen Konvektion in axialer Richtung von einer Stirnseite des Stators zur anderen Stirnseite des Stators durch Kühlkanäle geführt wird. Hier besteht aufgrund der Tiefe des Stators das Problem, dass die Luft sich bereits nach Eintreten in den Stator schnell erwärmt, und dann spätestens ab der Mitte des Stators (in axialer Richtung) bereits so weit erwärmt ist, dass keine effektive Wärmeabfuhr mehr vollzogen wird, was zu einer ungleichmäßigen Temperaturentwicklung innerhalb des Stators führt. Dies kann Leistungseinbußen und im schlimmsten Fall Funktionsbeeinträchtigungen zur Folge haben.

Andere Bemühungen haben den Versuch unternommen, kühle Luft radial von innen durch den Statorträger hindurch in die Nähe der Statorwicklung des Stators zu führen, etwa im Bereich der Mitte des Stators (in axialer Richtung). Die Luft musste dann axial zu beiden Stirnseiten hin aus dem Stator austreten. Dies hat den Nachteil, dass die Abführung der erwärmten Luft insbesondere auf der der Rotornabe zugewandten Seite des Stators, von der die Luft an die Windenergieanlage heranströmt, schwierig ist. Es bilden sich Zirkulationsströme aus, die dazu führen, dass bereits vorerwärmte Luft erneut ins Innere des Stators einströmt und erneut durch die Kühlausnehmungen strömt, was ebenfalls die Kühlleistung beeinträchtigt. Ferner gibt es im Stand der Technik zahlreiche Bemühungen, den Stator des Windenergieanlagengenerators mit einem flüssigkeitsbasierten Kühlkreislauf zu kühlen. Während dieses Kühlprinzip eine starke Wärmeabfuhr ermöglicht, ist der konstruktive Aufwand hierfür vergleichsweise hoch, und es bedarf besonderer Vorsichtsmaßnahmen, weil der Flüssigkeitskreislauf in unmittelbarer Nähe der stromführenden Statorwicklungen verläuft.

### P

Vor diesem Hintergrund lag der Erfindung die Aufgabe zugrunde, ein verbessertes Kühlkonzept für Windenergieanlagengeneratoren der eingangs bezeichneten Art vorzuschlagen.

Die Erfindung löst die ihr zugrunde liegende Aufgabe bei einem Statorträger der eingangs bezeichneten Art, indem dieser mit den Merkmalen von Anspruch 1 ausgebildet ist. Der Statorträger weist ein erstes Trägerblech, ein zweites Trägerblech und einen zwischen den beiden Trägerblechen ausbildeten Hohlraum auf, der radial nach außen hin geöffnet ist, sowie ein zwischen den beiden Trägeblechen angeordnetes Trennblech, welches den Hohlraum in eine erste Hohlraumsektion und eine zweite Hohlraumsektion unterteilt, insbesondere derart, dass keine Luft unmittelbar von der ersten Hohlraumsektion in die zweite Hohlraumsektion strömen kann. Ferner weist der Statorträger eine Anzahl erster Strömungskanäle auf, die sich von dem ersten Trägerblech aus direkt in die zweite Hohlraumsektion hinein erstrecken, und eine Anzahl zweiter Strömungskanäle, die sich von dem zweiten Trägerblech direkt in die erste Hohlraumsektion hinein erstrecken.

Die Erfindung basiert auf dem Ansatz, dass es mittels eines Trennblechs zu einer erzwungen radialen Strömung der Luft aus der Hohlraumsektion nach außen kommt. Luft kann in die Hohlraumsektionen ferner nur durch die jeweils mit ihnen verbundenen Strömungskanäle einströmen. Das heißt, dass Luft, die von außerhalb das Statorträgers das erste Trägerblech anströmt, durch die Strömungskanäle unter Überbrückung der ersten Hohlraumsektion direkt in die zweite Hohlraumsektion strömt, von wo aus sie radial nach außen aus dem Statorträger hinaus strömt. Des Weiteren strömt Luft, die radial von außerhalb des Statorträgers den Statorträger anströmt, beispielsweise von der Seite des ersten Trägerblechs her, radial nach innen in die erste Hohlraumsektion ein, und wird dann unmittelbar durch die zweiten Strömungskanäle zur Seite des zweiten Trägerblechs hin abgefördert, ohne durch die zweite Hohlraumsektion strömen zu können.

Diese zweiteilige Ausgestaltung des Statorträgers hat folgende Wirkung: wird der Statorträger so in einem Stator montiert, dass sein radial nach außen hin geöffneter Querschnitt strömungsleitend mit Öffnungsnuten verbunden ist, die sich in axialer Richtung durch den Statorträger hindurch erstrecken, sind im Wesentlichen zwei vordefinierte Strömungspfade durch den Stator hindurch definiert. Ein erster Strömungspfad besteht für Luft, die den Stator von einer ersten Seite her anströmt und die Lüftungsnuten des Stators eintritt. Die Luft wird durch die Lüftungsnuten bis zu demjenigen Bereich geführt, in dem der Statorträger angeordnet ist, dringt dort in die erste Hohlraumsektion des Statorträgers ein, und wird an der zweiten Hohlraumsektion vorbei aus den zweiten Strömungskanälen ausgeblasen. Ein zweiter Strömungspfad besteht für Luft, die den Stator von der ersten Seite her anströmt, darin, dass die Luft durch die ersten Strömungskanäle in den Statorträger eindringt, unmittelbar in die zweite Hohlraumsektion gelangt, und von dort aus radial nach außen in die Lüftungsnuten des Stators weitergeleitet wird, von wo aus sie dann auf der zweiten Statorseite wieder austritt. Es wird mit dem erfindungsgemäßen Statorträger also beständig frische Kühlluft sowohl an der ersten Stirnseite des Stators auf der Anströmseite, als auch in dem inneren Bereich des Stators, an der Stelle, wo der Statorträger sitzt, eingeführt. Hierdurch wird eine deutlich verbesserte Kühlleistung erzielt.

Der Statorträger wird vorteilhaft weitergebildet, in dem die Strömungskanäle jeweils gleichmäßig über den Umfang der Trägerbleche verteilt angeordnet sind. Hierdurch wird eine gleichmäßigere Verteilung der Luft über den Stator im verbauten Zustand des Statorträgers ermöglicht.

In einer bevorzugten Ausführungsform sind die ersten Strömungskanäle relativ zu den zweiten Strömungskanälen in Umfangsrichtung der Trägerbleche versetzt angeordnet. Alternativ oder zusätzlich sind vorzugsweise die ersten und zweiten Strömungskanäle auf dem gleichen Teilkreisdurchmesser angeordnet.

In einer bevorzugten Ausgestaltung weisen die ersten und zweiten Strömungskanäle jeweils den gleichen Öffnungsquerschnitt auf. Hierdurch wird gewährleistet, dass der Strömungswiderstand, den ein erster der Teilströme beim Einströmen in den Stator, gleich dem Strömungswiderstand ist, den der zweite Teilstrom beim Ausströmen aus dem Statorträger erfährt. Dies unterstützt eine gleich starke Strömungsausbildung in der ersten und zweiten Hohlraumsektion und unterstützt eine gleichmäßige Kühlung des Stators bei verbautem Statorträger.

Vorzugsweise sind die ersten und zweiten Strömungskanäle parallel zu der Längsachse des Statorträgers ausgerichtet. Dadurch wird ein günstiges Einströmverhalten erzielt.

Vorzugsweise ist das Trennblech mittels einer Anzahl von Stützstreben gegen das erste und zweite Trägerblech abgestützt. Hierdurch wird die mechanische Stabilität des Statorträgers verbessert, und das Trennblech zuverlässig in Position zwischen den beiden Trägerblechen gehalten. Die Stützstreben sind vorzugsweise dazu eingerichtet, Verwirbelungen innerhalb der ersten und zweiten Hohlraumsektionen zu erzeugen, so dass eine stärkere Verteilung der Luft in Umfangsrichtung innerhalb des Statorträgers erfolgt. Auch dies wirkt sich vorteilhaft auf die Kühlleistung aus.

Vorstehend ist die Erfindung gemäß einem ersten Aspekt unter Bezugnahme auf den Statorträger selbst beschrieben worden. Die Erfindung betrifft in einem zweiten Aspekt zusätzlich einen Stator für einen Generator einer Windenergieanlage, insbesondere für einen vielpoligen langsam drehenden Synchron-Ringgenerator.

Der Stator löst die eingangs bezeichnete Aufgabe, indem er ein Statorpaket aufweist, und einen Statorträger, indem das Statorblechpaket befestigt ist, wobei das Statorblechpaket einen ersten radialen Bereich zur Aufnahme einer Statorwicklung aufweist, und einen dazu benachbarten zweiten radialen Bereich, der eine Vielzahl von Lüftungsnuten aufweist, welche zu einer ersten Stirnseite des Stators und einer gegenüberliegenden zweiten Stirnseite des Stators hin offen sind, wobei der Statorträger nach einer der vorstehend beschriebenen bevorzugten Ausführungsformen gemäß dem ersten Aspekt ausgebildet ist, und die Lüftungsnuten in dem Bereich des Statorträgers mit dem Hohlraum des Statorträgers fluidleitend verbunden sind.

Hinsichtlich der Vorteile und einiger bevorzugter Ausführungsformen des erfindungsgemäßen Status wird auf die Ausführungen weiter oben zum ersten Aspekt der Erfindung verwiesen. Kühlluft kann in den Stator entweder durch die Lüftungsnuten oder die ersten Strömungskanäle eintreten. Diejenige Luft, welche durch die Lüftungsnuten in den Stator eintritt, wird im Bereich des Statorträgers in die erste Hohlraumsektion eingeleitet und tritt durch die zweiten Strömungskanäle aus dem Stator aus. Diejenige Luft, welche mittels der ersten Strömungskanäle in den Stator eintritt, wird im Bereich des Statorträgers in die zweite Hohlraumsektion und von dieser in die Lüftungsnuten hinein geführt, so dass sie aus den Lüftungsnuten aus dem Statorträger austritt.

Die Lüftungsnuten sind vorzugsweise durch eine Trennwand unterbrochen, die in axialer Richtung gesehen zwischen dem ersten und zweiten Trägerblech des Statorträgers angeordnet ist. Besonders bevorzugt sind die Trennwand der Lüftungsnuten und das Trennblech des Statorträgers in der gleichen Ebene angeordnet. Dies wird vorzugsweise dadurch erreicht, dass die Trennwand der Lüftungsnuten als Teil des Trennblechs des Statorträgers ausgebildet ist. Das Einführen einer Trennwand in die Lüftungsnuten in der Ebene des Trennblechs des Statorträgers sorgt für einen definierten Strömungsverlauf, weil Zirkulationsströmungen verhindert werden.

Vorzugsweise ist der Generator als Ringgenerator ausgebildet. Demnach sind die magnetisch aktiven Bereiche des Läufers und Stators, nämlich insbesondere die Statorblechpakete, in einem ringförmigen Bereich um einen Luftspalt herum angeordnet, welcher den Generatorrotor und den Stator trennt. Dabei ist der Generator in einem inneren Bereich mit einem Radius von wenigstens 50 % des mittleren Luftspaltradius frei von magnetisch wirksamen Bereichen.

Ein Ringgenerator kann auch dadurch definiert sein, dass die radiale Stärke der magnetisch aktiven Teile, oder - anders ausgedrückt- des magnetisch aktiven Bereichs, nämlich die radiale Dicke vom Innenrand des Polrads bis zum Außenrand des Stators, beziehungsweise vom Innenrand des Stators bis zum Außenrand des Generatorrotors, im Falle eines Außenläufers, kleiner als der Luftspaltradius ist, insbesondere dass die radiale Stärke des magnetisch aktiven Bereichs des Generators weniger als 30 %, insbesondere weniger als 25 % des Luftspaltradius beträgt. Außerdem oder alternativ kann ein Ringgenerator dadurch definiert sein, dass die Tiefe, nämlich die axiale Ausdehnung des Generators, kleiner als der Luftspaltradius ist, insbesondere dass die Tiefe weniger als 30 %, insbesondere weniger als 25 % des Luftspaltradius beträgt.

Außerdem oder alternativ ist ein Ringgenerator vorzugsweise vielpolig ausgebildet, und weist wenigstens 48, 96 oder wenigstens 192 Rotorpole auf.

Erfindungsgemäß wird unter einem langsam drehenden Generator ein Generator mit einer Umdrehungsgeschwindigkeit von 50 Umdrehungen pro Minute oder weniger, vorzugsweise 30 Umdrehungen pro Minute oder weniger verstanden.

Die Erfindung ist vorstehend unter Bezugnahme auf den Statorträger und den Stator gemäß dem ersten und dem zweiten Aspekt der Erfindung beschrieben worden. In einem dritten Aspekt betrifft die Erfindung ferner einen Generator einer Windenergieanlage, insbesondere einen vielpoligen langsam drehenden Synchron-Ringgenerator.

Die Erfindung löst die eingangs bezeichnete Aufgabe bei einem Generator der vorbezeichneten Art, indem der Generator einen Generatorrotor, insbesondere ausgebildet als Außenläufer, einen Stator, um welchen der Generatorrotor umlaufend angeordnet ist, und einen Statorträger aufweist, an dem der Stator befestigt ist, wobei der Statorträger nach einer der vorstehend beschriebenen bevorzugten Ausführungsformen ausgebildet ist, und/oder wobei der Stator nach einer der vorstehenden beschriebenen bevorzugten Ausführungsformen ausgebildet ist.

Hinsichtlich der Vorteile der bevorzugten Ausführungsformen des erfindungsgemäßen Generators wird auf die vorstehend beschriebenen Ausführungsformen zu dem ersten und zweiten Aspekt verwiesen.

Der erfindungsgemäße Generator wird vorzugsweise dadurch weitergebildet, dass er eine Anzahl von Lüftern zur Erzeugung einer Luftströmung durch das Innere des Generators hindurch aufweist. Die Anzahl von Lüftern ist vorzugsweise dazu eingerichtet, Luft aus dem Inneren des Generators anzusaugen und nach außerhalb des Generators hin auszublasen. Indem die Anzahl von Lüftern als Sauglüfter bezogen auf das Innere des Generators ausgebildet sind, wird die ungewollte Ausbildung eines Wärmestaus im Generatorinneren vermieden, beziehungsweise zumindest ihre Wahrscheinlichkeit eingedämmt.

In einer bevorzugten Ausführungsform weist der Generator eine erste, der Rotornabe zugewandte Seite und eine gegenüberliegende, der Rotornabe abgewandte Seite auf, wobei die Anzahl von Lüftern auf der zweiten Seite des Generators angeordnet ist, und besonders bevorzugt stationär angeordnet ist.

In bevorzugten Ausgestaltungen ist vorzugsweise der Statorträger auf einem Achszapfen oder einem Maschinenträger in der Gondel der Windenergieanlage montiert, und die Anzahl der Lüfter ist ebenfalls auf dem Achszapften und/oder dem Maschinenträger montiert.

Vorzugsweise ist eine Mehrzahl von Lüftern vorgesehen, die gleichmäßig über den Umfang des Generators angeordnet werden, um Luft aus dem Generatorinneren anzusaugen. Das Ansaugen hat zur Folge, dass von der ersten Seite des Generators her, also von Seiten der Rotornabe her, Luft den Generator anströmt, durch die gemäß der Erfindung definierten Strömungskanäle und Lüftungsnuten in den Stator eintritt und durch die jeweils entsprechenden Strömungskanäle und Lüftungsnuten wieder austritt.

Die Erfindung betrifft in einem weiteren Aspekt eine Windenergieanlage. Die Erfindung löst die eingangs bezeichnete Aufgabe bei einer Windenergieanlage, indem diese einen Generator nach einer der vorstehend beschriebenen bevorzugten Ausführungsformen aufweist.

Die Erfindung wird im Folgenden unter Bezugnahme auf die beigefügten Figuren anhand eines bevorzugten Ausführungsbeispiels näher beschrieben. Hierbei zeigen:
- Firgur 1: eine Windenergieanlage gemäß der vorliegenden Erfindung,
- Figur 2: einen Statorträger gemäß einem im bevorzugten Ausführungsbeispiel für eine Windenergieanlage gemäß Figur 1,
- Figur 3: eine erste schematische Schnittdarstellung durch den Statorträger gemäß Figur 1,
- Figur 4: eine zweite schematische Schnittdarstellung durch den Statorträger gemäß Figur 2,
- Figur 5: eine schematische Schnittdarstellung durch einen Stator und Generator für eine Windenergieanlage gemäß Figur 1, und
- Figur 6: eine Detaildarstellung des Stators aus Figur 5.

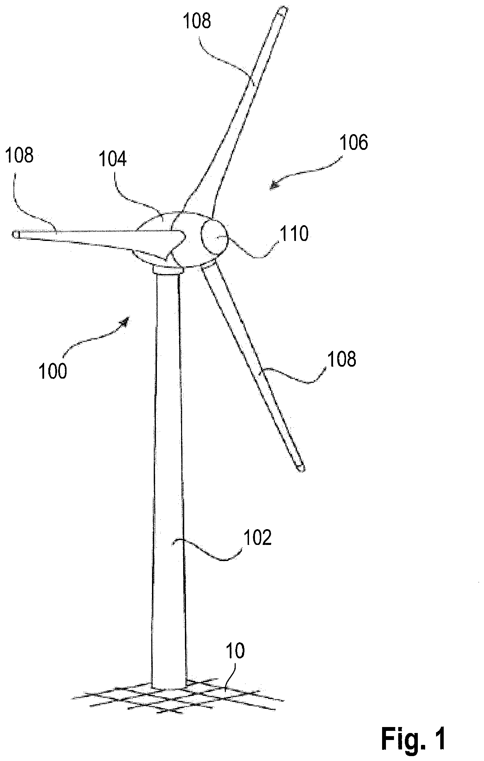

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

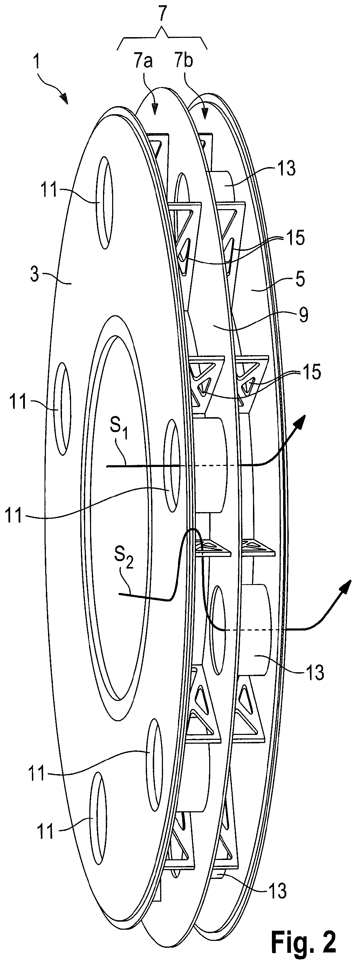

Figur 2 zeigt einen innerhalb der Gondel 104 der Windenergieanlage 100 gemäß Figur 1 vorgesehenen Statorträger 1. Der Statorträger 1 weist ein erstes Trägerblech 3 und ein zweites Trägerblech 5 auf. Die beiden Trägerbleche 3, 5 sind voneinander beabstandet und weisen zwischen sich einen Hohlraum 7 auf. In dem Hohlraum 7 ist ein Trennblech 9 angeordnet, welches den Hohlraum 7 in eine erste Hohlraumsektion 7a und eine zweite Hohlraumsektion 7b aufteilt.

In dem ersten Trägerblech 3 ist eine Anzahl erster Strömungskanäle 11 vorgesehen, die sich von dem ersten Trägerblech 3 aus direkt in die zweite Hohlraumsektion 7b hinein erstrecken. Anströmende Luft gelangt durch die ersten Strömungskanäle 11 direkt in die zweite Hohlraumsektion 7b, nicht aber in die erste Hohlraumsektion 7a.

Das zweite Trägerblech 5 weist eine Anzahl zweiter Strömungskanäle 13 auf, die vorzugsweise der Anzahl der ersten Strömungskanäle 11 entsprechen, zu den ersten Strömungskanälen 11 versetzt auf dem gleichen Teilkreisdurchmesser angeordnet und über den Umfang verteilt angeordnet sind. Die zweiten Strömungskanäle 13 erstrecken sich von dem zweiten Trägerblech 5 aus direkt in die erste Hohlraumsektion 7a hinein, so dass Luft, die radial von außen in die erste Hohlraumsektion 7a einströmt, unmittelbar durch die zweiten Strömungskanäle 13 zum zweiten Trägerblech 5 gelangt, aber nicht in die zweite Hohlraumsektion 7b.

Vorzugsweise ist das Trennblech 9 äquidistant zwischen den ersten und zweiten Trägerblechen 3, 5 angeordnet. Das Trennblech 9 ist vorzugsweise mittels einer Anzahl von Stützstreben 15 gegen das erste und zweite Trägerblech 3, 5 abgestützt und trägt besonders bevorzugt versteifend zur mechanischen Struktur des Statorträgers 1 bei. Die Stützstreben 15 sind vorzugsweise dazu eingerichtet, beispielsweise mittels in ihnen vorgesehener Ausnehmungen, in den jeweiligen Hohlraumsektionen 7a, 7b für Strömungsverwirbelungen zu sorgen, um eine Verteilung einströmender beziehungsweise durchströmender Luft entlang des Umfangs zu unterstützen.

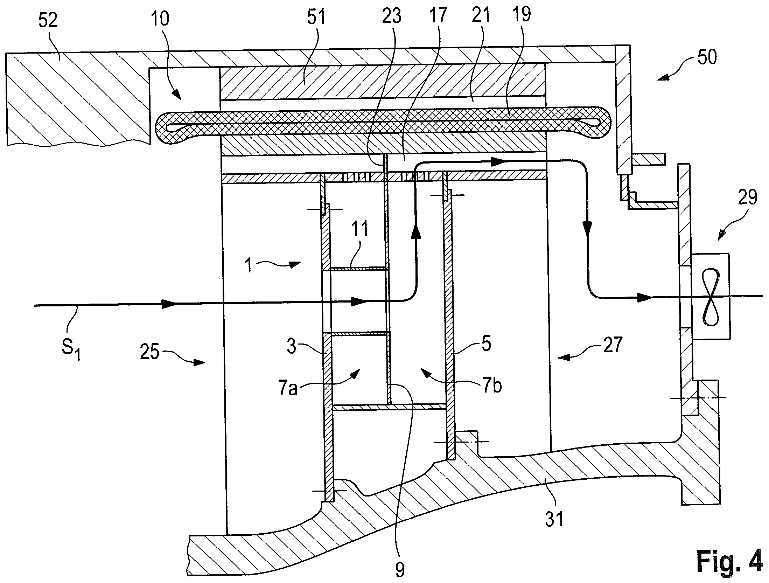

In Figur 2 sind ein erster Strömungspfad S₁ und ein zweiter Strömungspfad S₂ eingezeichnet, die die beiden möglichen Transportwege für Luft durch den Statorträger hindurch skizzieren. Gemäß Strömungspfad S₁ kann Luft von der ersten Seite 25 (Fig. 4) her das erste Trägerblech 3 anströmen, von wo aus sie durch die ersten Strömungskanäle 11 direkt in die zweite Hohlraumsektion 7b gelangt, um von dort aus radial nach außen aus dem Statorträger 1 auszutreten. Luft kann allerdings nur in die erste Hohlraumsektion 7a gelangen, indem sie radial von außen in den Statorträger 1 einströmt gemäß Strömungspfad S₂. Von der ersten Hohlraumsektion 7a aus kann die Luft dann durch die zweiten Strömungskanäle 13 zum zweiten Trägerblech 5 hin und aus dem Statorträger 1 zur zweiten Seite hin austreten. Während mit dem ersten Strömungspfad S₁ also frische angeströmte Luft direkt in die zweite Hohlraumsektion und somit die rechte Hälfte des Statorträgers transportiert wird, wird gleichermaßen Luft, die schon durch den Stator geströmt ist, an der Stelle des Statorträgers radial in die erste Hohlraumsektion 7a hinein geleitet, von wo aus sie dann unter Umgehung der zweiten Hohlraumsektion 7b direkt durch die zweiten Strömungskanäle 13 aus dem Statorträger austreten kann. Kühle Luft muss also jeweils nur einen Abschnitt des Stators in axialer Richtung durchströmen, geregelt durch die Geometrie des Statorträgers. Weitere Details auch zur Einbausituation des Statorsträgers sind den folgenden Figuren zu entnehmen.

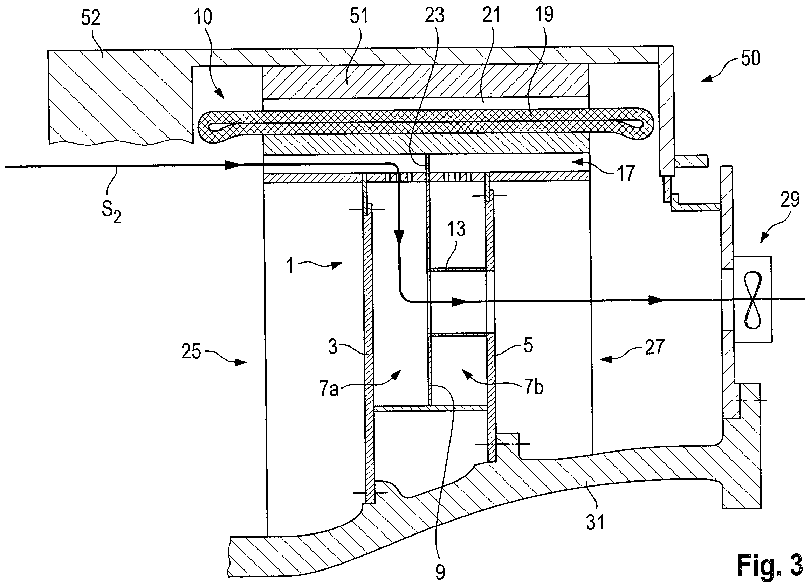

Figur 3 zeigt die schematische Anordnung des Statorträgers 1 an einem Stator 10. Der Stator 10 ist Teil eines Generators 50, welcher im Inneren der Windenergieanlage gemäß Figur 1 angeordnet ist. Figur 3 zeigt den Schnitt durch den Statorträger 1 in der Ebene, in welcher der zweite Strömungspfad S₂ liegt.

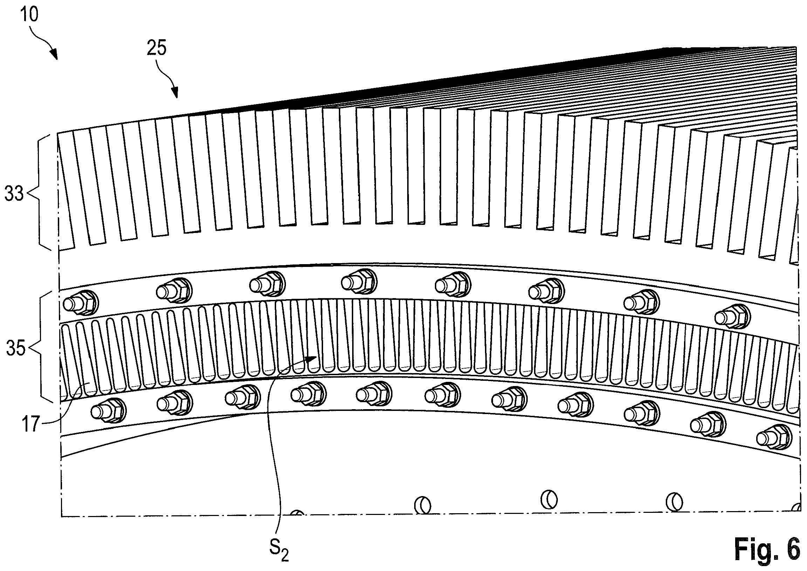

Der Stator 10 weist neben dem Statorträger 1 eine Vielzahl von Lüftungsnuten 17 auf, die im Bereich 33 (Fig. 6) des magnetischen Rückens des Stators angeordnet sind und im Wesentlichen axial durch den Stator 10 verlaufen. Benachbart zu den Lüftungsnuten 17 weist der Stator 10 eine Statorwicklung 19 auf.

Der Stator 10 ist von einem Luftspalt 21 umgeben. Um den Stator 10 herum ist ein Generatorrotor 52 mit seiner Rotorwicklung 51 angeordnet. Der Generatorrotor 52 ist in allgemein bekannter Weise mit der Rotornabe verbunden.

Die Nuten 17 innerhalb des Stators 10 sind von einer Trennwand 23 unterbrochen. Zwischen den Lüftungsnuten 17 und den Hohlraumsektionen 7a, 7b besteht im Bereich des Statorträgers 1 eine fluidleitende Verbindung. Auf diese Weise kann der Luftstrom S₂, welcher den Stator 10 an einer ersten Seite 25 von der Rotornabe her anströmt, durch die Lüftungsnuten 17 in den Stator 10 eindringen und Wärmeenergie von der Statorwicklung 19 aufnehmen. Bei Erreichen der Trennwand 23 wird der Luftstrom S₂ radial nach innen in die erste Hohlraumsektion 7a gelenkt, von wo aus er aus dem Statorträger 1 und dem Stator 10 austreten kann, ohne dass die in der ersten Hälfte des Stators 10 bereits erwärmte Luft des Luftstroms S₂ zusätzlich noch an den Abschnitten der Statorwicklung 19 auf der anderen Seite der Trennwand 23 vorbeiströmen kann. Vorzugsweise ist die Trennwand 23 an derselben Ebene angeordnet wie das Trennblech 9 des Statorträgers 1. Besonders bevorzugt ist die Trennwand 23 eine Verlängerung des Trennblechs 9.

Wie sich aus Figur 4 ergibt, welche in der Schnittebene des ersten Strömungspfads S₁ liegt, vollzieht sich ein ähnlicher Luftleitprozess für die in den Figuren 3 und 4 rechte Hälfte des Stators 10. Luft kann entlang des Strömungspfads S₁ in den Stator 10 eintreten, wird durch die ersten Strömungskanäle 11 innerhalb des Statorträgeres 1 aber unmittelbar in die zweite Hohlraumsektion 7b eingeleitet, ohne zuvor in die erste Hohlraumsektion 7a strömen zu können. Von dort aus gelangt die Luft zwangsweise radial nach außen in die Lüftungsnuten 17, und von dort aus zu der zweiten Seite 27 des Stators 10, wo sie aus dem Stator 10 austritt. Aufgrund der Trennwand 23 ist es für die Luft nicht möglich, aus der Hohlraumsektion 7b entgegen der gewünschten Strömungsrichtung, also zur Rotornabe hin, zurückzuströmen, was eine Zirkulationsströmung mit erhitzter Luft zuverlässig vermeidet.

Wie aus den Figuren 3 und 4 zu sehen ist, ist vorzugsweise mindestens ein Lüfter 29 dem Generator 50 zugeordnet. Der Lüfter 29 ist vorzugsweise dazu eingerichtet, Luft aus dem Inneren des Generators 50 anzusaugen, so dass sich ein Unterdruck ausbildet, der Luft entlang der Strömungspfade S₁ und S₂ in den Stator 10 von der Rotornabe her, also der ersten Seite 25 des Stators 10 her, einsaugt. Frische Kühlluft wird der Statorwicklung zum einen an der Seite 25 bei Eintritt in die Lüftungsnuten zugeführt, und zum anderen unmittelbar hinter der Trennwand 23, so dass beide Bereiche der Statorwicklung 19 vor und hinter der Trennwand 23 gleichermaßen mit frischer Kühlluft versorgt werden können. Der mindestens eine Lüfter 29 ist vorzugsweise an einem Achszapfen 31 befestigt.

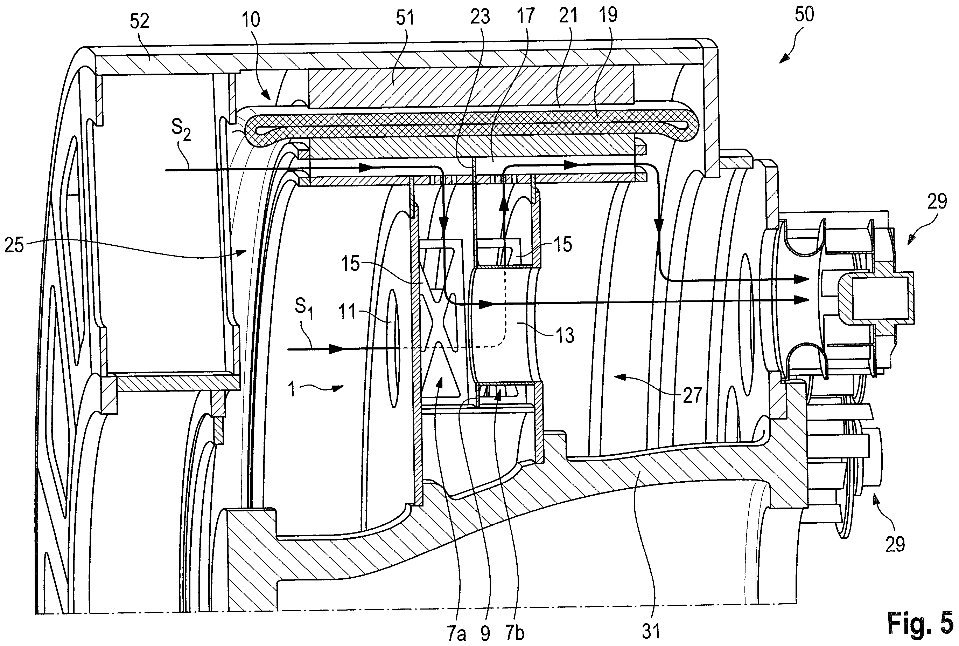

In Figur 5 ist exemplarisch die Anordnung der beiden Luftströme S₁ und S₂ dargestellt. Die Luft entlang der Luftströme S1 und S2 wird in den Hohlraumsektionen 7a, 7b optional mittels der Stützstreben 15 verwirbelt. Ansonsten wird hinsichtlich der Struktur, die in Figur 5 zu sehen ist, auf die insoweit übereinstimmenden Bestandteile der Figuren 3 und 4 verwiesen.

Figur 6 zeigt schließlich zur Komplettierung des Bildes eine Detailansicht der Stirnseite 25 des Stators 10. Der Stator 10 weist einen ersten radialen Bereich 33 zur Aufnahme der Statorwicklung auf, und einen radial innerhalb dazu benachbarten zweiten Bereich 35, in dem die Lüftungsnuten 17 ausgebildet sind. Durch jene Lüftungsnuten 17 tritt der Strömungspfad S₂ in den Stator 10 ein, um dann gemäß den Figuren 3 bis 5 durch den Stator 10 hindurch zu strömen.

Wie sich aus den vorstehenden Erläuterungen zu den Figuren 1 bis 6 anschaulich ergibt, stellt die Erfindung eine hoch effiziente Kühlmöglichkeit für Statoren zur Verfügung, die aufgrund ihrer Tiefe, vorzugsweise 0,5 Meter oder mehr, besonders bevorzugt 1,0 Meter oder mehr bei konventionellen Kühlkonzepten nur auf der Anströmseite ausreichend gekühlt würden, aufgrund der zwischenzeitlichen Erhitzung der Luft aber an der Abströmseite höhere Wärmeentwicklung hätten. Wenngleich die Kühlkonzeptionen anhand des vorliegenden Ausführungsbeispiels für einen Außenläufergenerator gezeigt wurden, so ist die Erfindung auch als auf Innenläufergeneratoren anwendbar zu verstehen.

## Patentansprüche

1. Statorträger (1) für einen Stator (10) eines Windenergieanlagengenerators, insbesondere eines vielpoligen langsam drehenden Synchron-Ringgenerators, mit einem ersten Trägerblech (3),
einem zweiten Trägerblech (5),
einem zwischen den beiden Trägerblechen (3) ausgebildeten Hohlraum (7), der radial nach außen hin geöffnet ist,
einem zwischen den beiden Trägerblechen (3) angeordneten Trennblech (9), welches den Hohlraum (7) in eine erste Hohlraumsektion (7a) und eine zweite Hohlraumsektion (7b) unterteilt,
einer Anzahl erster Strömungskanäle (11), die sich von dem ersten Trägerblech (3) direkt in die zweite Hohlraumsektion (7b) hinein erstrecken, und
einer Anzahl zweiter Strömungskanäle (13), die sich von dem zweiten Trägerblech (5) direkt in die erste Hohlraumsektion (7a) hinein erstrecken.

2. Statorträger (1) nach Anspruch 1,
wobei die Strömungskanäle (11,13) jeweils gleichmäßig über den Umfang der Trägerbleche (3) verteilt angeordnet sind.

3. Statorträger (1) nach Anspruch 1 oder 2,
wobei die ersten Strömungskanäle (11) relativ zu den zweiten Strömungskanälen (13) in Umfangsrichtung der Trägerbleche (3) versetzt angeordnet sind.

4. Statorträger (1) nach einem der vorstehenden Ansprüche,
wobei die ersten und zweiten Strömungskanäle (11,13) auf dem gleichen Teilkreisdurchmesser angeordnet sind.

5. Statorträger (1) nach einem der vorstehenden Ansprüche,
wobei die ersten und zweiten Strömungskanäle (11,13) jeweils den gleichen Öffnungsquerschnitt aufweisen.

6. Statorträger (1) nach einem der vorstehenden Ansprüche,
wobei die ersten und zweiten Strömungskanäle (11, 13) paralllel zu der Längsachse des Statorträgers (1) ausgerichtet sind.

7. Statorträger (1) nach einem der vorstehenden Ansprüche,
wobei das Trennblech (9) mittels einer Anzahl von Stützstreben (15) gegen das erste und zweite Trägerblech (3) abgestützt ist.

8. Stator (10) für einen Generator (50) einer Windenergieanlage (100), mit
einem Statorblechpaket zur Aufnahme einer Statorwicklung (19), und
einem Statorträger (1), an dem das Statorblechpaket befestigt ist, wobei das Statorblechpaket einen ersten radialen Bereich (33) zur Aufnahme der Statorwicklung aufweist, und einen dazu benachbarten zweiten radialen Bereich (35), der eine Vielzahl von Lüftungsnuten (17) aufweist, welche zu einer ersten Stirnseite (25) des Stators (10) und zu einer gegenüberliegenden zweiten Stirnseite (27) des Stators (10) hin offen sind, wobei
der Statorträger (1) nach einem der vorstehenden Ansprüche ausgebildet ist, und
die Lüftungsnuten (17) in dem Bereich des Statorträgers (1) mit dem Hohlraum des Statorträgers (1) fluidleitend verbunden sind.

9. Stator (10) nach Anspruch 8,
wobei die Lüftungsnuten (17) durch eine Trennwand (23) unterbrochen sind, die in axialer Richtung gesehen zwischen dem ersten und zweiten Trägerblech (3,5) des Statorträgers (1) angeordnet ist.

10. Stator (10) nach Anspruch 9,
wobei die Trennwand (23) der Lüftungsnuten (17) und das Trennblech (9) des Statorträgers (1) in der gleichen Ebene angeordnet sind.

11. Stator (10) nach Anspruch 9 oder 10,
wobei die Trennwand (23) der Lüftungsnuten (17) als Teil des Trennblechs (9) des Statorträgers (1) ausgebildet ist.

12. Generator (50) einer Windenergieanlage, insbesondere vielpoliger langsam drehender Synchron-Ringgenerator, mit
einem Generatorrotor (52), insbesondere einem Außenläufer,
einem Stator (10), um welchen der Generatorrotor (52) umlaufend angeordnet ist, und einem Statorträger (1), an dem der Stator (10) befestigt ist,
wobei der Statorträger (1) nach einem der Ansprüche 1 bis 7 ausgebildet ist, und/oder der Stator (10) nach einem der Ansprüche 8 bis 11 ausgebildet ist.

13. Generator (50) nach Anspruch 12, mit
einer Anzahl von Lüftern (29) zur Erzeugung einer Luftströmung durch das Innere des Generators (50),
wobei vorzugsweise die Anzahl von Lüftern (29) dazu eingerichtet ist, Luft aus dem Inneren des Generators (50) anzusaugen.

14. Generator (50) nach Anspruch 13,
wobei der Generator (50) eine erste, der Rotornabe zugewandte Seite (25) und eine gegenüberliegende zweite, der Rotornabe abgewandte Seite (27) aufweist,
wobei die Anzahl von Lüftern (29) auf der zweiten Seite (27) des Generators angeordnet ist, und besonders bevorzugt stationär angeordnet ist.

15. Windenergieanlage (100),
mit einem Generator (50) nach einem der Ansprüche 12 bis 14.

## Claims

1. A stator carrier (1) for a stator (10) of a wind turbine generator, in particular a multi-pole slowly rotating synchronous ring generator, comprising
a first carrier plate (3),
a second carrier plate (5),
a cavity (7) which is provided between the two carrier plates (3) and is open radially outwardly,
a separating plate (9) which is arranged between the two carrier plates (3) and which subdivides the cavity (7) into a first cavity portion (7a) and a second cavity portion (7b),
a number of first flow passages (11) extending from the first carrier plate (3) directly into the second cavity portion (7b) and
a number of second flow passages (13) extending from the second carrier plate (5) directly into the first cavity portion (7a).

2. A stator carrier (1) according to claim 1
wherein the flow passages (11, 13) are each distributed uniformly over the periphery of the carrier plates (3).

3. A stator carrier (1) according to claim 1 or claim 2
wherein the first flow passages (11) are arranged in displaced relationship relative to the second flow passages (13) in the peripheral direction of the carrier plates (3).

4. A stator carrier (1) according to one of the preceding claims
wherein the first and second flow passages (11, 13) are arranged on the same pitch circle diameter.

5. A stator carrier (1) according to one of the preceding claims
wherein the first and second flow passages (11, 13) each have the same opening cross-section.

6. A stator carrier (1) according to one of the preceding claims
wherein the first and second flow passages (11, 13) are oriented parallel to the longitudinal axis of the stator carrier (1).

7. A stator carrier (1) according to one of the preceding claims
wherein the separating plate (9) is supported against the first and second carrier plates (3) by means of a number of support struts (15).

8. A stator (10) for a generator (50) of a wind turbine (100), comprising
a laminated stator core for receiving a stator winding (19) and
a stator carrier (1) to which the laminated stator core is fixed, wherein the laminated stator core defines a first radial region (33) for receiving the stator winding and a second radial region (35) adjacent thereto, which has a plurality of ventilation grooves (17) which lead to a first end (25) of the stator (10) and to an opposite second end (27) of the stator (10), wherein
the stator carrier (1) is according to one of the preceding claims, and
the ventilation grooves (17) are connected in fluid-conducting relationship in the region of the stator carrier (1) to the cavity of the stator carrier (1).

9. A stator (10) according to claim 8
wherein the ventilation grooves (17) are interrupted by a separating wall (23) arranged between the first and second carrier plate (3, 5) of the stator carrier (1) in the axial direction.

10. A stator (10) according to claim 9
wherein the separating wall (23) of the ventilation grooves (17) and the separating plate (9) of the stator carrier (1) are arranged in the same plane.

11. A stator (10) according to claim 9 or claim 10
wherein the separating wall (23) of the ventilation grooves (17) is in the form of part of the separating plate (9) of the stator carrier (1).

12. A generator (50) of a wind turbine, in particular a multi-pole slowly rotating synchronous ring generator, comprising
a generator rotor (52), in particular an external rotor,
a stator (10) around which the generator rotor (52) is arranged to rotate, and
a stator carrier (1) to which the stator (10) is fixed,
wherein the stator carrier (1) is according to one of claims 1 to 7, and/or the stator (10) is according to one of claims 8 to 11.

13. A generator (50) according to claim 12 including
a plurality of fans (29) for generating an air flow through the interior of the generator (50),
wherein preferably, the number of fans (29) is adapted to suck in air from the interior of the generator (50).

14. A generator (50) according to claim 13
wherein the generator (50) has a first side (25) facing the rotor hub and an opposite second side (27) facing away from the rotor hub,
wherein the number of fans (29) is arranged on the second side (27) of the generator and particularly preferably is arranged stationarily.

15. A wind turbine (100) with a generator (50) according to one of claims 12 to 14.

## Revendications

1. Support de stator (1) pour un stator (10) d'un générateur d'éolienne, en particulier d'un générateur annulaire synchrone multipolaire tournant lentement, avec
une première tôle de support (3),
une deuxième tôle de support (5),
un espace creux (7) réalisé entre les deux tôles de support (3), qui est ouvert radialement en direction de l'extérieur,
une tôle de séparation (9) disposée entre les deux tôles de support (3), laquelle divise l'espace creux (7) en une première section d'espace creux (7a) et en une deuxième section d'espace creux (7b),
un nombre de premiers canaux d'écoulement (11), qui s'étendent depuis la première tôle de support (3) directement à l'intérieur de la deuxième section d'espace creux (7b), et
un nombre de deuxièmes canaux d'écoulement (13), qui s'étendent depuis la deuxième tôle de support (5) directement à l'intérieur de la première section d'espace creux (7a).

2. Support de stator (1) selon la revendication 1,
dans lequel les canaux d'écoulement (11, 13) sont disposés de manière répartie respectivement uniformément sur la périphérie des tôles de support (3).

3. Support de stator (1) selon la revendication 1 ou 2,
dans lequel les premiers canaux d'écoulement (11) sont disposés de manière décalée par rapport aux deuxièmes canaux d'écoulement (13) dans la direction périphérique des tôles de support (3).

4. Support de stator (1) selon l'une quelconque des revendications précédentes,
dans lequel les premiers et deuxièmes canaux d'écoulement (11, 13) sont disposés sur le même diamètre de cercle partiel.

5. Support de stator (1) selon l'une quelconque des revendications précédentes,
dans lequel les premiers et deuxièmes canaux d'écoulement (11, 13) présentent respectivement la même section transversale d'ouverture.

6. Support de stator (1) selon l'une quelconque des revendications précédentes,
dans lequel les premiers et deuxièmes canaux d'écoulement (11, 13) sont orientés de manière parallèle par rapport à l'axe longitudinal du support de stator (1).

7. Support de stator (1) selon l'une quelconque des revendications précédentes,
dans lequel la tôle de séparation (9) prend appui contre la première et la deuxième tôle de support (3) au moyen d'un nombre d'entretoises d'appui (15).

8. Stator (10) pour un générateur (50) d'une éolienne (100), avec
un paquet de tôles de stator servant à loger un enroulement de stator (19), et
un support de stator (1), sur lequel le paquet de tôles de stator est fixé, dans lequel
le paquet de tôles de stator présente une première zone radiale (33) pour recevoir l'enroulement de stator, et une deuxième zone radiale (35) adjacente à la première, qui présente une pluralité de rainures d'aération (17), lesquelles sont ouvertes en direction d'un premier côté frontal (25) du stator (10) et en direction d'un deuxième côté frontal (27) faisant face du stator (10), dans lequel
le support de stator (1) est réalisé selon l'une quelconque des revendications précédentes, et
les rainures d'aération (17) sont reliées en communication fluidique avec l'espace creux du support de stator (1) dans la zone du support de stator (1).

9. Stator (10) selon la revendication 8,
dans lequel les rainures d'aération (17) sont interrompues par une paroi de séparation (23), qui est disposée, vue dans une direction axiale, entre la première et la deuxième tôle de support (3, 5) du support de stator (1).

10. Stator (10) selon la revendication 9,
dans lequel la paroi de séparation (23) des rainures d'aération (17) et la tôle de séparation (9) du support de stator (1) sont disposées dans le même plan.

11. Stator (10) selon la revendication 9 ou 10,
dans lequel la paroi de séparation (23) des rainures d'aération (17) est réalisée comme une partie de la tôle de séparation (9) du support de stator (1).

12. Générateur (50) d'une éolienne, en particulier générateur annulaire synchrone multipolaire tournant lentement, avec
un rotor de générateur (52), en particulier un induit extérieur,
un stator (10), autour duquel le rotor de générateur (52) est disposé en périphérie, et un support de stator (1), sur lequel est fixé le stator (10),
dans lequel le support de stator (1) est réalisé selon l'une quelconque des revendications 1 à 7, et/ou le stator (10) est réalisé selon l'une quelconque des revendications 8 à 11.

13. Générateur (50) selon la revendication 12, avec
un nombre de ventilateurs (29) pour générer un écoulement d'air à travers l'intérieur du générateur (50),
dans lequel de préférence le nombre de ventilateurs (29) est mis au point pour aspirer de l'air hors de l'intérieur du générateur (50).

14. Générateur (50) selon la revendication 13,
dans lequel le générateur (50) présente un premier côté (25) tourné vers le moyeu de rotor et un deuxième côté (27) faisant face opposé au moyeu de rotor,
dans lequel le nombre de ventilateurs (29) est disposé sur le deuxième côté (27) du générateur et est disposé de manière particulièrement préférée de manière stationnaire.

15. Éolienne (100),
avec un générateur (50) selon l'une quelconque des revendications 12 à 14.
